# EUROPÄISCHE PATENTSCHRIFT

(11) **EP 2 308 730 B1**
(45) Veröffentlichungstag und Bekanntmachung des Hinweises auf die Patenterteilung: **02.01.2019**
(21) Anmeldenummer: 10011281.2
(22) Anmeldetag: 28.09.2010
(51) Int. Cl.: B60T 7/12, B60T 13/74, B60L 3/02, B66F 17/00

(54) **Steuerungsverfahren einer elektrisch betätigten Feststellbremse einer mobilen Arbeitsmaschine**
Control method for an electrically actuated parking brake of a mobile work device
Procédé de commande d'un frein de stationnement électrique d'une machine de travail mobile

(30) Priorität: 09.10.2009 DE 102009048829; 27.04.2010 DE 102010018463
(43) Veröffentlichungstag der Anmeldung: 13.04.2011
(73) Patentinhaber: STILL GmbH, 22113 Hamburg (DE)
(72) Erfinder: Tügel, Caspar, 20253 Hamburg (DE); Bergmann, Ansgar, 22941 Bargteheide (DE)
(74) Vertreter: Patentship Patentanwaltsgesellschaft mbH

(56) Entgegenhaltungen:
- EP-A2- 1 031 487
- EP-A2- 1 950 171
- DE-A1- 3 020 821
- GB-A- 2 051 986
- JP-A- 2008 222 181

## Beschreibung

Die Erfindung betrifft ein Steuerungsverfahren für eine automatisiert durch eine Steuerung betätigbare Feststellbremse einer mobilen Arbeitsmaschine. Insbesondere betrifft die Erfindung ein Steuerungsverfahren für eine automatisiert durch eine Steuerung betätigbare Feststellbremse eines Flurförderzeugs, wobei die Feststellbremse mittels eines elektrischen Aktuators betätigbar ist, der mit einem Übertragungsmittel, insbesondere einem Bremsseil, mit der Feststellbremse zu deren Betätigung in Wirkverbindung steht, die Bremsbetätigungskraft der Feststellbremse aufbringt und die Steuerung Bremszustände erfasst, in denen die Steuerung die Feststellbremse durch den Aktuator in die Bremsstellung betätigt.

Beim Betrieb von mobilen Arbeitsmaschinen tritt sehr häufig der Fall auf, dass sich Einsatzsituationen der mobilen Arbeitsmaschine, bei denen diese nach einer Anfahrt an einem Ort stehend eingesetzt wird und dabei sicher durch eine Feststellbremse gebremst werden muss, mit solchen Einsatzsituationen abwechseln, in denen die mobile Arbeitsmaschine sich bewegt, um eine neue Arbeitsposition einzunehmen. Dabei tritt auch häufig der Fall ein, dass der Bediener oder Fahrer der mobilen Arbeitsmaschine aussteigen muss. Besonders häufig ist dies bei Flurförderzeugen wie etwa Gabelstaplern der Fall, wenn z.B. aufzunehmende Waren durch den Fahrer überprüft werden müssen. Es ist dann notwendig, dass die Feststellbremse sehr häufig angezogen und wieder gelöst werden muss, wenn das Flurförderzeug länger steht oder der Fahrer das Flurförderzeug verlässt. Dabei ist nicht auszuschließen, dass es zu Nachlässigkeiten seitens des Fahrers kommt und, um Zeit einzusparen, die Feststellbremse nicht in die Bremsstellung betätigt wird.

Bei mobilen Arbeitsmaschinen, insbesondere Flurförderzeugen, Baumaschinen und landwirtschaftlichen Fahrzeugen, ist bekannt, eine Feststellbremse mit elektromechanisch wirkenden Betätigungseinrichtungen vorzusehen. Derartige elektrische Betätigungseinrichtungen weisen in der Regel einen die Betätigungskraft für die Bremsstellung der Feststellbremse erzeugenden Aktuator oder Elektromotor auf, der z.B. über eine Getriebeeinrichtung einen Gewindespindeltrieb antreibt, an dem ein Übertragungsmittel, beispielsweise ein Seilzug eines Bremsseils oder ein Bremsgestänge, zur Betätigung der Feststellbremse befestigt ist. Der Gewindespindeltrieb ist bevorzugt selbsthemmend ausgebildet, damit die aufgebrachte Bremskraft beim Abschalten des Elektromotors erhalten bleibt und somit die Feststellbremse bei abgeschaltetem Elektromotor in der Lösestellung bzw. der Bremsstellung verbleibt. Aufgrund der Selbsthemmung des Gewindespindelgetriebes ist bei derartigen elektrischen Betätigungseinrichtungen eine Betätigung der Feststellbremse, wie etwa ein unbeabsichtigtes Lösen, ohne Energieversorgung nicht möglich.

Weiter sind auch sogenannte Negativbremsen oder Federspeicherbremsen bekannt, bei denen eine vorgespannte Feder die Bremskraft aufbringt, die zum Lösen der Federspeicherbremse durch eine Lüftvorrichtung, beispielsweise einen Magneten oder einen hydraulischen Lüftdruck, entgegen der Feder in die Lösestellung beaufschlagt wird. Diese Federspeicherbremsen werden auch als automatisch oder halbautomatisch einfallende Bremsen ausgeführt.

Aus der DE 10 2006 019 088 A1 ist eine mobile Arbeitsmaschine, insbesondere ein Flurförderzeug, mit einer eine Bremsstellung und eine Lösestellung aufweisenden Federspeicherbremse bekannt, die mittels eines einen Bremslüftdruck erzeugenden Bremsventils steuerbar ist. Das Bremsventil steht mit einer Betriebsbremsvorgabeeinrichtung, insbesondere einem Bremspedal, in Wirkverbindung und ist bei einer Betätigung der Betriebsbremsvorgabeeinrichtung in Richtung einer Verringerung des an der Federspeicherbremse anstehenden Bremslüftdruckes beaufschlagbar, wobei die Betriebsbremsvorgabeeinrichtung bei einer Betätigung mit einer mit dem Bremsventil in Wirkverbindung stehenden, vorgespannten Federeinrichtung in Wirkverbindung bringbar ist, die mit zunehmender Betätigung der Betriebsbremsvorgabeeinrichtung in Richtung einer Erhöhung der Federkraft beaufschlagbar ist. Die Feststellbremse wird auch als Betriebsbremse verwendet.

Nachteilig an diesem Stand der Technik ist, dass die hydraulische Ansteuerung zum Lüften der Federspeicherbremse zusätzlichen Aufwand bei der Hydraulik erfordert und insgesamt relativ aufwendig ist. Eine automatisierte Ansteuerung kann nur erfolgen, wenn entsprechende, von einer Steuerung ansteuerbare hydraulische Ventileinrichtungen vorgesehen sind. Ein dosiertes Bremsen erfordert zusätzlich viel Aufwand, da nicht die direkte Bremsbetätigungskraft aufgebracht wird, sondern eine hierzu gegenwirkende Kraft. Wenn es zu einer Fehlfunktion kommt, so besteht die Gefahr, dass eine abrupte Bremsung erfolgt, wenn die Kraft, die die Federspeicherbremse lüftet, sehr schnell abfällt und die gesamte Federkraft unvermittelt auf die Bremse als Bremsbetätigungskraft wirkt. Dies zu vermeiden erfordert erheblichen Aufwand oder eine Auslegung der Federspeicherbremse, so dass diese generell verzögert einfällt. Letzteres erschwert wiederum die Dosierbarkeit der Federspeicherbremse, soweit diese auch als Betriebsbremse eingesetzt werden soll. Auch muss jeweils eine Anpassung der Komponenten an unterschiedliche Fahrzeuge erfolgen, insbesondere muss die Federkraft an die jeweilige Fahrzeugmasse angepasst werden, um eine in jedem Fall ausreichende Bremskraft zu garantieren. Besonders von Nachteil sind der erforderliche Aufwand und die damit verbundenen Kosten, wenn die Feststellbremse nur für den Fall eines Defektes der regulären Betriebsbremse als Hilfsbremse bei der Fahrt eingesetzt werden soll.

Aus der DE 197 52 022 A1 ist ein Fahrzeug, insbesondere ein Flurförderzeug, mit einem elektrischen Fahrantrieb, einer Feststellbremseinrichtung und einer hydraulischen Pumpe zur Versorgung einer Arbeitshydraulik und/oder einer Lenkung bekannt. Die Feststellbremseinrichtung ist als Federspeicherbremse ausgebildet, die zum Lüften an die Förderleitung der hydraulischen Pumpe anschließbar ist, wobei die Federspeicherbremse beim Absteigen der Bedienperson und/oder bei nicht betätigtem Fahrantrieb automatisch in die Bremsstellung beaufschlagbar ist.

Aus der EP 1 031 487 A2 ist eine hydraulisch gelüftete Federspeicherbremse bekannt, die betätigt wird, wenn das Fahrzeug zum Stillstand kommt.

Aus der DE 30 20 821 A1 ist eine hydraulisch gelüftete Federspeicher-Feststellbremse bekannt, bei der durch einen elektrischen Schalter am Fahrersitz die Anwesenheit eines Fahrers festgestellt werden kann und die Federspeicher-Feststellbremse betätigt wird. Weiter offenbart die D3 einen Schlüsselschalter, bei dessen Betätigung die Hydraulikleitung zum Lüften der Feststellbremse freigegeben wird, so dass bei Inbetriebnahme des Fahrzeugs die Feststellbremse gelöst wird.

Der vorliegenden Erfindung liegt die Aufgabe zugrunde, ein Steuerungsverfahren für eine mittels einer elektrischen Betätigungseinrichtung betätigten Feststellbremse für eine mobile Arbeitsmaschine zur Verfügung zu stellen, mit dem die Betriebssicherheit der mobilen Arbeitsmaschine optimiert werden kann.

Diese Aufgabe wird durch ein Steuerungsverfahren mit den Merkmalen des Anspruchs 1 gelöst. Vorteilhafte Weiterbildungen des Verfahrens werden in den Unteransprüchen angegeben.

Die Aufgabe wird erfindungsgemäß dadurch gelöst, dass bei einem Steuerungsverfahren für eine Feststellbremse einer mobilen Arbeitsmaschine, insbesondere eines Flurförderzeugs, wobei die Feststellbremse mittels eines elektrischen Aktuators betätigbar ist, der mit einem Übertragungsmittel, insbesondere einem Bremsseil, mit der Feststellbremse zu deren Betätigung in Wirkverbindung steht und die Bremsbetätigungskraft der Feststellbremse aufbringt, die Steuerung Bremszustände erfasst, in denen die Steuerung die Feststellbremse durch den Aktuator in eine Bremsstellung betätigt. Dabei werden bei stehender mobiler Arbeitsmaschine von der Steuerung mindestens die folgenden Bremszustände erfasst:
- ein Signal eines Belegungssensors eines Fahrerarbeitsplatzes, insbesondere eines Fahrersitzes, dass der Fahrerarbeitsplatz nicht belegt ist, nach dem Ablauf einer Belegungstoleranzzeit,
- ein Ausschaltsignal einer Zugangskontrolleinrichtung, insbesondere eines Schlüsselschalters oder einer Codeeingabevorrichtung,
oder mindestens alle folgenden Bremszustände erfasst:
- ein Signal eines Belegungssensors eines Fahrerarbeitsplatzes, insbesondere eines Fahrersitzes, dass der Fahrerarbeitsplatz nicht belegt ist, nach dem Ablauf einer Belegungstoleranzzeit,
- ein Ausschaltsignal einer Zugangskontrolleinrichtung, insbesondere eines Schlüsselschalters oder einer Codeeingabevorrichtung,
- ein Betätigungssignal eines Not-Aus-Schalters.

Vorteilhaft wird durch die gleichzeitige Berücksichtigung dieser Fälle in weitest gehendem Masse vermieden, dass durch Routine und, um Zeit zu sparen, es zu Nachlässigkeiten beim Betätigen der Feststellbremse in die Bremsstellung durch den Fahrer kommt. Das Betätigen der Feststellbremse in die Bremsstellung erfolgt bei typischen Betriebssituationen automatisiert und kann daher von dem Fahrer weder vergessen noch vernachlässigt werden. Dies erhöht die Betriebssicherheit, da in den Fällen, in denen nicht unbedingt von einer Kontrolle über das Fahrzeug seitens des Fahrers ausgegangen werden kann, wie beim Verlassen des Fahrerarbeitsplatzes, beim Betätigen und gegebenenfalls Abziehen eines Schlüsselschalters oder "Zündschlüssels" bzw. beim Betätigen einer sonstigen Zugangskontrolleinrichtung wie etwa einer Codeeingabeeinrichtung sowie gegebenenfalls beim Betätigen des Notausschalter - sofern ein derartiger vorhanden ist -, die Feststellbremse automatisiert von der Steuerung in die Bremsstellung betätigt wird und die mobile Arbeitsmaschine somit gegen Wegrollen gesichert ist. Durch das automatisierte in die Bremsstellung Betätigen der Feststellbremse wird auch der Komfort für den Fahrer erhöht. Dabei kann eine jede bekannte Art einer bevorzugt elektrisch betätigten Feststellbremse zum Einsatz kommen, insbesondere elektrische Betätigungen für Feststellbremsen, die anstelle eines Handhebels ein Bremsseil zur Betätigung der Feststellbremse in die Bremsstellung durch einen Aktuator bewegen. Diese elektrischen Feststellbremsen stehen kostengünstig zur Verfügung.

In einer zweckmäßigen Ausgestaltung der Erfindung erfasst die Steuerung bei stehender mobiler Arbeitsmaschine ein fehlendes Signal eines Fahrgeschwindigkeitsgebers zur Steuerung der Fahrgeschwindigkeit der mobilen Arbeitsmaschine, insbesondere eines Fahrpedals, nach dem Ablauf einer Fahrsignalwartezeit, insbesondere einer Zeit im Bereich von 1 Minute, als Bremszustand.

Dadurch wird unabhängig von einer Belegung des Fahrerarbeitsplatzes und daher z.B. auch, wenn ein Fahrersitz als Fahrerarbeitsplatz noch besetzt ist, jedoch für den Zeitraum einer Fahrsignalwartezeit keine Betätigung etwa eines Fahrpedals erfolgte, die Feststellbremse in eine Bremsstellung betätigt. Gerade bei mobilen Arbeitsmaschinen oder Flurförderzeugen kommt es gelegentlich zu dem Fall, dass der Fahrer nach Anhalten des Fahrzeugs auf dem Fahrerarbeitsplatz verbleibt. Dies kann der Fall sein, wenn das Fahrzeug angehalten wird, um mit einer Arbeitshydraulik, wie einem Hubmast, oder etwa einem Schaufelbagger bei einer mobilen Arbeitsmaschine zu arbeiten. Vor allem bei Flurförderzeugen kommt es häufig vor, dass der Fahrer, während das Fahrzeug steht, Auftragspapiere oder ein Logistikterminal bearbeitet bzw. der Fahrer anhält, um mit Personen neben dem Fahrzeug, wie etwa Vorgesetzten oder Arbeitskollegen, Arbeitsaufträge oder Probleme zu besprechen oder zu klären. Diese Personen in der unmittelbaren Umgebung des Flurförderzeugs wären bei einem unbeabsichtigten Anfahren des Flurförderzeugs gefährdet. In diesem Fall werden Komfort und Sicherheit erhöht, da die Feststellbremse automatisch in die Bremsstellung betätigt wird und die Notwendigkeit einer Handbetätigung entfällt.

In vorteilhafter Ausführung können die Fahrbewegungen der mobilen Arbeitsmaschine über eine Einpedalsteuerung gesteuert werden, bei der über einen Fahrtrichtungsschalter eine Fahrtrichtung vorgebbar ist und über ein Fahrpedal ein Fahrsignal eingebbar ist, wobei bei stehender mobiler Arbeitsmaschine ein Betätigungssignal des Fahrtrichtungsschalters und ein nachfolgendes Betätigen des Fahrpedals als ein Bremslösezustand erfasst wird und die Steuerung die Feststellbremse durch den Aktuator in eine Lösestellung bewegt.

Durch die Betätigung des Fahrtrichtungsschalters zur Vorgabe der Fahrtrichtung ist sichergestellt, dass bei einer nachfolgenden Betätigung des Fahrpedals der Fahrer sich über die gewählte Fahrtrichtung bewusst ist und daher das Fahrzeug kontrolliert. Daher kann hier zur Erhöhung des Komforts die Feststellbremse automatisch in eine Lösestellung betätigt werden.

In zweckmäßiger Ausgestaltung des Steuerungsverfahrens ist durch einen Feststellbremsschalter, insbesondere einen Tastschalter, ein Bremslösezustand, in dem die Steuerung die Feststellbremse durch den Aktuator in eine Lösestellung betätigt wird, oder ein Bremszustand manuell eingebbar.

Durch einen solchen Tastschalter kann die automatisierte elektrisch betätigte Feststellbremse manuell bequem betätigt werden.

Vorteilhaft ist die Steuerung, insbesondere über ein CAN-Bussystem, mit einer Fahrzeugsteuerung der mobilen Arbeitsmaschine verbunden und ist bei einer Unterbrechung der Verbindung die Feststellbremse dosiert betätigbar, insbesondere durch die Dauer des Betätigens oder Loslassens des Feststellbremsschalters.

In einem solchen Betriebszustand bei Ausfall der Verbindung, beispielsweise des CAN-Bussystems, kann die Steuerung keine Informationen über den Betriebszustand der mobilen Arbeitsmaschine, wie etwa die Geschwindigkeit, das Signal des Not-Aus-Schalters oder des Belegungssensors des Fahrerarbeitsplatzes, erhalten. Jedoch wird es dem Fahrer ermöglicht, stattdessen die Bremskraft in dieser Art Offline-Modus, in dem keine Verbindung besteht, sinnvoll über den Feststellbremsschalter zu dosieren. Vorteilhaft erfasst bei Betätigung des Feststellbremsschalters bei fahrender Arbeitsmaschine die Steuerung einen Bremszustand und steuert in einem ersten Schritt den Aktuator derart, dass die mobile Arbeitsmaschine mit einer gesteuerten, insbesondere weniger als die Hälfte der maximalen Bremskraft betragenden, Bremskraft bis zum Stillstand abgebremst wird und steuert in einem zweiten Schritt den Aktuator derart, dass die Feststellbremse mit voller Bremskraft bei stehender mobiler Arbeitsmaschine in die Bremsstellung betätigt und somit angezogen wird.

Dadurch wird ein abruptes Abbremsen vermieden und die mobile Arbeitsmaschine nur mit mäßiger Bremskraft abgebremst. Nach dem Stillstand wird dann die Feststellbremse fest angezogen, so dass eine ausreichend große Haltekraft zur Sicherung des Fahrzeugs gegen unbeabsichtigtes in Bewegung setzen gegeben ist.

In einer besonders vorteilhaften Ausgestaltung des erfindungsgemäßen Steuerungsverfahrens erfasst die Steuerung bei fahrender Arbeitsmaschine das Signal des Belegungssensors des Fahrerarbeitsplatzes, insbesondere eines Fahrersitzes, dass der Fahrerarbeitsplatz nicht belegt ist, nach einer Belegungstoleranzzeit, insbesondere nach 1 bis 2 Sekunden, als Bremszustand und steuert in einem ersten Schritt den Aktuator so, dass die mobile Arbeitsmaschine mit einer gesteuerten, insbesondere weniger als die Hälfte der maximalen Bremskraft betragenden, Bremskraft bis zum Stillstand abgebremst wird und steuert in einem zweiten Schritt den Aktuator so, dass die Feststellbremse mit voller Bremskraft bei stehender mobiler Arbeitsmaschine in die Bremsstellung betätigt wird.

Dies ergibt eine zusätzliche Sicherheitsfunktion. Weiterhin ist es oftmals bei mobilen Arbeitsmaschinen der Fall, dass Fahrer bei noch nicht vollständig zum Stillstand gekommenen Fahrzeugen bereits im Ausrollen den Fahrerarbeitsplatz verlassen und aussteigen. Das beschriebene Verhalten stellt dann das Betätigen der Feststellbremse ohne gefährliches abruptes Abbremsen sicher. Durch die Belegungstoleranzzeit wird sicher gestellt, dass es nicht nur durch eine kurze Entlastung eines Fahrersitzes beispielsweise aufgrund von Bewegungen des Fahrers zu einer ungewollten Bremsung kommt.

In einer besonders günstigen Ausgestaltung des erfindungsgemäßen Steuerungsverfahrens ist die mobile Arbeitsmaschine ein Flurförderzeug, insbesondere ein Gabelstapler, und die Steuerung erhält die Fahrgeschwindigkeit des Flurförderzeugs, insbesondere über ein CAN-Bussystem, und bestimmt abhängig von der Fahrgeschwindigkeit und mindestens einem weiteren Parameter, wie aufliegende Last und/oder Hubhöhe und/oder Fahrzeugneigung des Flurförderzeugs und/oder Beschleunigung und/oder Querbeschleunigung und/oder durch einen Fahrer vorgegebener Fahrgeschwindigkeit und/oder Lenkwinkel die Notwendigkeit einer Geschwindigkeitsreduzierung aus Sicherheitsgründen und steuert den Aktuator so, dass das Flurförderzeug mit einer gesteuerten Bremskraft abgebremst wird.

Da die Feststellbremse sowohl automatisiert als auch dosiert in die Bremsstellung betätigt werden kann, können durch diese Abbremsungen erfolgen, um eine für einen Betriebszustand zu hohe und daher unsichere Geschwindigkeit zu reduzieren. Dies kann zum Beispiel bei zu enger Kurvenfahrt und resultierenden hohen Querbeschleunigungen oder bei einer Fahrzeugneigung, beispielsweise eines Gabelstaplers als Ausführungsform eines Flurförderzeugs, in Längsrichtung aufgrund einer Steigung, in der sich der Gabelstapler befindet, der Fall sein. Aus einer erfassten Neigung kann auch eine nötige Haltekraft bestimmt werden, um die Feststellbremse nur soweit erforderlich bei stehendem Gabelstapler anzuziehen, oder eine Anfahrhilfe zu verwirklichen, die die Feststellbremse in einer Steigung erst löst, wenn das Antriebsmoment der Arbeitsmaschine groß genug ist, um ein Zurückrollen zu verhindern. Hierzu werden der Steuerung Informationen über die aktuelle Fahrgeschwindigkeit zugeführt, beispielsweise über einen CAN-Bus von einem digitalen Tachometer. Die Steuerung kann dann abhängig von der Geschwindigkeit und den beschriebenen weiteren Parametern durch die Feststellbremse den Gabelstapler bzw. das Flurförderzeug abbremsen.

Eine Abbremsung, um einen unzulässigen Betriebszustand zu vermeiden, kann auch erfolgen, wenn bei einer aktiven Steuerung und beispielsweise einem nicht aktivem Fahrantrieb, etwa nach einem Betätigen des Not-Aus-Schalters oder der Zugangskontrolleinrichtung, eine hohe Beschleunigung im Verhältnis zur Geschwindigkeit der mobilen Arbeitsmaschine auftritt. Dies ist etwa denkbar, wenn sich die mobile Arbeitsmaschine gerade in Fahrt bergab in einem Gefälle befindet.

Bevorzugt sind die Belegungstoleranzzeit des Belegungssensors und/oder die Fahrsignalwartezeit des Fahrgeschwindigkeitsgebers von der Steuerung in Abhängigkeit von der Fahrzeugneigung, beispielsweise in einer Steigung, an der sich die Arbeitsmaschine befindet, anpassbar. So kann beispielsweise die Fahrzeugneigung derart berücksichtigt werden, dass an einer Steigung bei fehlendem Signal des Fahrgeschwindigkeitsgebers die Feststellbremse von der Steuerung nach einer verkürzten Fahrsignalwartezeit, bevorzugt im Bereich von 1 bis 5 Sekunden, in die Bremsstellung betätigt wird. Ebenfalls kann die Steigung berücksichtigt werden, wenn bei einem Signal des Belegungssensors des Fahrerarbeitsplatzes, dass der Fahrerarbeitsplatz nicht belegt ist, die Feststellbremse bei einer Entlastung des Fahrerarbeitsplatzes sofort und ohne Belegungstoleranzzeit von der Steuerung in die Bremsstellung betätigt wird.

Das Flurförderzeug kann mittels elektrischer Antriebsmotoren angetrieben werden und als Parameter der Betriebszustand der Antriebsmotoren, insbesondere deren Stromaufnahme, erfasst werden.

In einer vorteilhaften Ausgestaltung des erfindungsgemäßen Verfahrens erfasst die Steuerung die Fahrgeschwindigkeit und die Beschleunigung des Flurförderzeugs und bestimmt aus dem Verhältnis von Beschleunigung zu Fahrgeschwindigkeit die Notwendigkeit einer Geschwindigkeitsreduzierung aus Sicherheitsgründen.

Dadurch kann insbesondere auf Gefällestrecken anhand der Beschleunigung aufgrund der momentanen Fahrgeschwindigkeit erkannt werden, wenn eine unzulässig hohe Geschwindigkeit bzw. Geschwindigkeitszunahme erreicht werden könnte. Durch die automatisierte Feststellbremse kann diese als Hilfsbremse in einem solchen Fall dazu eingesetzt werden, um durch ein dosiertes Bremsen das Erreichen einer unzulässig hohen Geschwindigkeit zu verhindern.

Vorteilhaft kann die Steuerung abhängig von Sende-/Empfangseinheiten in der Umgebung der mobilen Arbeitsmaschine, insbesondere von RFID-Transpondern, von denen drahtlose Signale empfangen werden, die mobile Arbeitsmaschine mit einer gesteuerten Bremskraft abbremsen.

Sende-/Empfangseinheiten in der Umgebung können Kollisionsvermeidungssystemen und/oder Personenerkennungssystemen zugeordnet sein.

Da bei dem erfindungsgemäßen Verfahren die Möglichkeit besteht, die mobile Arbeitsmaschine automatisch und dosiert abzubremsen, kann damit auf einfache Art und Weise z.B. ein Kollisionsvermeidungssystem erreicht werden. Gestützt auf RFID-Transponder an möglichen Hindernissen kann beim Unterschreiten eines Mindestabstands eine Abbremsung erfolgen. Hierzu ist vorteilhaft kein Eingriff in das Betriebsbremssystem erforderlich. Für den seltenen Fall einer solchen Abbremsung zur Kollisionsvermeidung kann die Feststellbremse mithilfe des erfindungsgemäßen Verfahrens herangezogen werden. Ebenso können durch RFID-Transponder auch Personen erkannt werden und es kann eine Abbremsung erfolgen, wenn sich Personen in einem Gefahrenbereich befinden. Es ist auch denkbar, durch RFID-Transponder eine Bodensteuerung einzurichten, insbesondere eine Zonenerkennung, bei der z.B. Bereiche mit einer Fahrgeschwindigkeitsbegrenzung durch RFID-Transponder gekennzeichnet werden und im Fall eines Befahrens mit zu großer Geschwindigkeit eine automatische Abbremsung erfolgt. Durch die automatisierte Feststellbremse, die auch als Hilfsbetriebsbremse arbeiten kann, steht eine kostengünstige Möglichkeit zur Verfügung, solche Funktionen umzusetzen.

In Vorteilhafter Ausgestaltung des erfindungsgemäßen Verfahrens wird die gesteuerten Bremskraft nicht durch die Feststellbremse erzeugt, sondern durch einen Fahrantrieb der mobilen Arbeitsmaschine, der eine Bremskraft erzeugen kann, insbesondere durch elektrische Antriebsmotoren, die als Generatoren eine Bremskraft erzeugen können.

Dadurch wird Verschleiß vermieden. Eine Abbremsung mit einer gesteuerten Bremskraft, die nicht der vollen Bremskraft der Feststellbremse entspricht, erfolgt durch die Feststellbremse nur, wenn eine Steuerverbindung mit einer Fahrzeugsteuerung der mobilen Arbeitsmaschine, etwa ein CAN-Bussystem ausfällt, oder wenn eine Abbremsung durch den Fahrantrieb nicht erfolgen kann, etwa weil ein Fehler im Fahrantrieb vorliegt oder dieser durch Betätigen des Not-Aus-Schalters oder der Zugangskontrolleinrichtung abgeschaltet wurde.

Vorteilhaft erfasst die Steuerung bei fahrender mobiler Arbeitsmaschine nach einem Ausschaltsignal der Zugangskontrolleinrichtung den Stillstand der mobilen Arbeitsmaschine als Bremszustand.

Wird die mobile Arbeitsmaschine während der Fahrt durch die Zugangskontrolleinrichtung etwa eine Codeeingabevorrichtung, einen Schlüsselschalter oder den Zündschlüssel abgestellt, so kommt es zu einem automatischen Betätigen der Feststellbremse in die Bremsstellung, sobald die mobile Arbeitsmaschine ungebremst ausgerollt ist.

Vorteilhaft erfasst die Steuerung bei fahrender mobiler Arbeitsmaschine nach einem Betätigungssignal des Not-Aus-Schalters erst den Stillstand der mobilen Arbeitsmaschine als Bremszustand.

Beim Betätigen der Zugangskontrolleinrichtung und/oder des Not-Aus-Schalters rollt somit die mobile Arbeitsmaschine ungebremst aus und wird automatisch die Feststellbremse in die Bremsstellung betätigt, sobald die Arbeitsmaschine zum Stillstand gekommen ist.

In einer besonders zweckmäßigen Ausgestaltung des erfindungsgemäßen Steuerungsverfahrens wird nach Bremszuständen, bei denen bei stehender mobiler Arbeitsmaschine ein Signal eines Belegungssensors eines Fahrerarbeitsplatzes, insbesondere eines Fahrersitzes, dass der Fahrerarbeitsplatz nicht belegt ist, nach Ablauf einer Belegungstoleranzzeit erfasst wird oder bei denen ein Signal, dass der Fahrerarbeitsplatz belegt und gleichzeitig ein fehlendes Signal eines Fahrgeschwindigkeitsgebers zur Steuerung der Fahrgeschwindigkeit der mobilen Arbeitsmaschine, insbesondere eines Fahrpedals, nach einer Fahrsignalwartezeit erfasst wird, von der Steuerung ein Assistenzbremsbetriebsmodus erkannt, in dem die Feststellbremse von der Steuerung bei einer Betätigung des Fahrgeschwindigkeitsgebers in eine Lösestellung betätigt wird.

Dadurch kann der Komfort nochmals erhöht werden. Insbesondere bei Gabelstaplern kommen die hier als Assistenzbremsungen aufgeführten Fälle häufig vor. Zum einen wird im Stand der Fahrerarbeitsplatz verlassen, da der Fahrer beispielsweise eine Warenbeschriftung überprüfen muss, und es erfolgt ein automatisches Betätigen der Feststellbremse wenn für eine bestimmte Zeit, die hier als Belegungstoleranzzeit bezeichnet ist, der Fahrerarbeitsplatz, insbesondere ein Fahrersitz, unbelegt ist. Zum anderen wird längere Zeit ein Fahrgeschwindigkeitsgeber, vor allem ein Fahrpedal, bei auf dem Fahrerarbeitsplatz befindlichem Fahrer nicht betätigt, da der Fahrer z.B. mit Personen spricht, Auftragspapiere bearbeitet oder auch eventuell mit einer Arbeitshydraulik, wie z.B. einem Hubmast arbeitet. Auch in diesen Fällen wird ein Bremszustand erkannt, der eine Assistenzbremsung darstellt, da sie zur leichteren und bequemeren Bedienung der mobilen Arbeitsmaschine durch den Fahrer dient. Wenn in solchen Fällen weiter gefahren werden soll, kann zur Erhöhung des Komforts nach solchen Assistenzbremsungen der automatisierten Feststellbremse das Lösen der Feststellbremse bereits bei jeglicher Fahrpedalbetätigung und gültiger Fahrtrichtungsvorgabe bzw. -wahl erfolgen.

Die Fahrbewegungen der Arbeitsmaschine können über eine Einpedalsteuerung gesteuert werden, bei der über einen Fahrtrichtungsschalter eine Fahrtrichtung vorgebbar ist und über ein Fahrpedal als Fahrgeschwindigkeitsgeber ein Fahrsignal eingebbar ist, wobei bei stehender mobiler Arbeitsmaschine im Assistenzbremsbetriebsmodus bei vorgegebener Fahrtrichtung bei einem Betätigen des Fahrpedals die Feststellbremse in eine Lösestellung von der Steuerung betätigt wird.

Die Fahrbewegungen der Arbeitsmaschine können über eine Zweipedalsteuerung gesteuert werden, bei der ein Vorwärtspedal als Fahrgeschwindigkeitsgeber ein Fahrsignal für Vorwärtsfahrt und ein Rückwärtspedal als Fahrgeschwindigkeitsgeber ein Fahrsignal für Rückwärtsfahrt erzeugt, wobei bei stehender mobiler Arbeitsmaschine im Assistenzbremsbetriebsmodus bei einem Betätigen des Vorwärtspedals und/oder des Rückwärtspedal die Feststellbremse in eine Lösestellung von der Steuerung betätigt wird.

Daten über die erfolgten Bremsungen sowie mögliche Fehlermeldungen der Feststellbremse, wie auch von der Steuerung errechnete Informationen über einen Wartungsbedarf der Feststellbremse können auch drahtlos, z.B. per WLAN an einen Empfänger bzw. ein Datennetzwerk übertragen werden, um z.B. zur Optimierung eines Flottenmanagements ausgewertet zu werden. Es ist auch eine kontinuierliche Eigendiagnose der Feststellbremse und Erfassung des Bremsverschleißes möglich.

Die Steuerung kann so ausgebildet sein, dass nach einem Bremszustand aufgrund eines Betätigungssignals des Not-Aus-Schalters erst nach zweimaligem Betätigungssignal eines Fahrgeschwindigkeitsgebers zur Steuerung der Fahrgeschwindigkeit der mobilen Arbeitsmaschine, insbesondere eines Fahrpedals, die Feststellbremse in eine Lösestellung betätigt wird.

Durch die Kombination der zuvor beschriebenen Verfahrensschritte werden bei größtmöglicher Sicherheit der Komfort für den Fahrer und somit die Arbeitsleistung der mobilen Arbeitsmaschine, insbesondere jedoch eine Warenumschlagleistung eines Flurförderzeugs wie etwa eines Gabelstaplers in hohem Maße optimiert.

Die Aufgabe wird auch durch eine mobile Arbeitsmaschine, insbesondere ein Flurförderzeug, mit einer durch eine Steuerung mittels eines elektrischen Aktuator betätigbaren Feststellbremse gelöst, wobei der Aktuator mit einem Übertragungsmittel, insbesondere einem Bremsseil, mit der Feststellbremse zu deren Betätigung in Wirkverbindung steht und die Bremsbetätigungskraft der Feststellbremse aufbringt, und die Steuerung ein Verfahren nach einem der vorhergehenden Ansprüche durchführt.

Der Aktuator kann einen Elektromotor und einen mit dem Elektromotor trieblich verbundenen Gewindespindeltrieb, insbesondere einen selbsthemmenden Gewindespindeltrieb, umfassen, wobei der Gewindespindeltrieb auf das Übertragungsmittel wirkt.

Die Feststellbremse kann als einheitliches Bauteil für eine Vielzahl unterschiedlicher mobiler Arbeitsmaschinen, z.B. mehrerer Größen von Gabelstaplern eingesetzt werden, wobei eine Anpassung an die unterschiedlichen Fahrzeuge allein per Software in der Steuerung erfolgen kann, indem z.B. angepasst an unterschiedliche Fahrzeuggewichte abgespeichert wird, wie fest die Feststellbremse angezogen werden soll, um eine ausreichende Haltekraft im Stand oder eine gewünschte gesteuerte Abbremsung bei der Fahrt zu erreichen.

Ebenso können auf einfache Weise bestimmte Kundenwünsche zum Verhalten der Feststellbremse durch eine Softwareanpassung in der Steuerung realisiert werden. Vorteilhaft und im Gegensatz zu Federspeicherbremsen kommt es bei Ausfall der Energieversorgung auch nicht zu einer plötzlichen Vollbremsung und einer Betätigung der Feststellbremse in die Bremsstellung.

Weitere Vorteile und Einzelheiten der Erfindung werden anhand des in den schematischen Figuren dargestellten Ausführungsbeispiels näher erläutert. Hierbei zeigt
- Fig. 1: eine als Flurförderzeug ausgebildete mobile Arbeitsmaschine mit einer Feststellbremse, bei der das erfindungsgemäße Verfahren eingesetzt wird,
- Fig. 2: einen Aktuator der Feststellbremse in einer perspektivischen Darstellung und
- Fig. 3: eine Ansicht einer Bedienkonsole der mobilen Arbeitsmaschine.

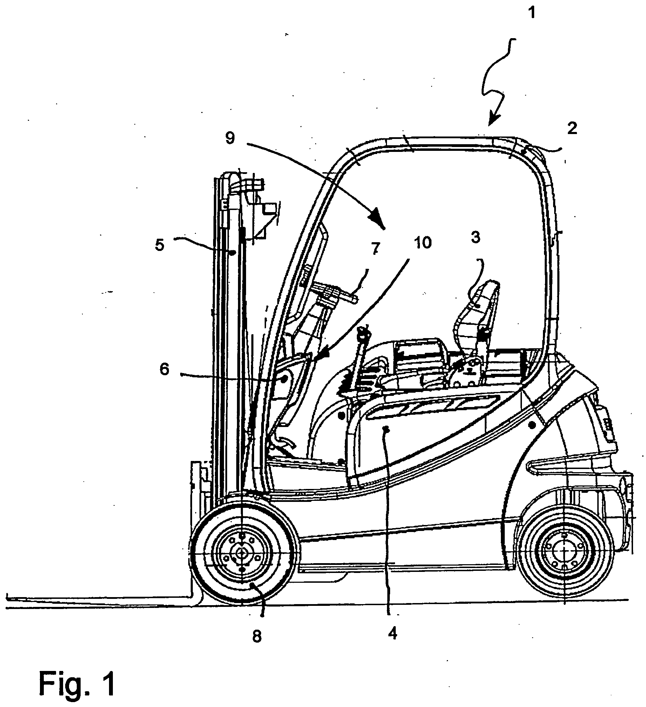

In der Fig. 1 ist ein als Gegengewichtsgabelstapler 1 ausgebildetes Flurförderzeug, beispielsweise ein batterie-elektrisch betriebener Gabelstapler, als Beispiel einer mobilen Arbeitsmaschine dargestellt. Innerhalb eines Fahrerschutzdaches 2 ist ein Fahrerarbeitsplatz 9 ausgebildet, der beispielsweise einen Fahrersitz 3 umfasst. Der Fahrersitz 3 ist auf einer Batterie- bzw. Motorhaube 4 angeordnet und weist einen hier nicht dargestellten Belegungssensor auf, der die Anwesenheit des Fahrers erkennt. Im vorderen, einem Hubmast 5 zugewandten Bereich des Fahrerschutzdaches 2, dem sogenannten Vorderaufbau, ist eine Bedienkonsole 6, beispielsweise ein als Cockpit ausgebildetes Armaturenbrett, als weiterer Bestandteil des Fahrerarbeitsplatzes 9 angeordnet. An der Bedienkonsole 6 ist eine Lenkrad 7 angeordnet. Im Bereich der Bedienkonsole 6 ist ein Aktuator 10 zur elektrischen Betätigung einer nicht näher dargestellten Feststellbremse des Gabelstaplers 1 angeordnet. Die Feststellbremse wirkt hierbei auf angetriebene Vorderräder 8 des Gabelstaplers 1 und ist an den angetrieben Vorderrädern oder an bzw. in einer Antriebsachse der Vorderräder 8 angeordnet.

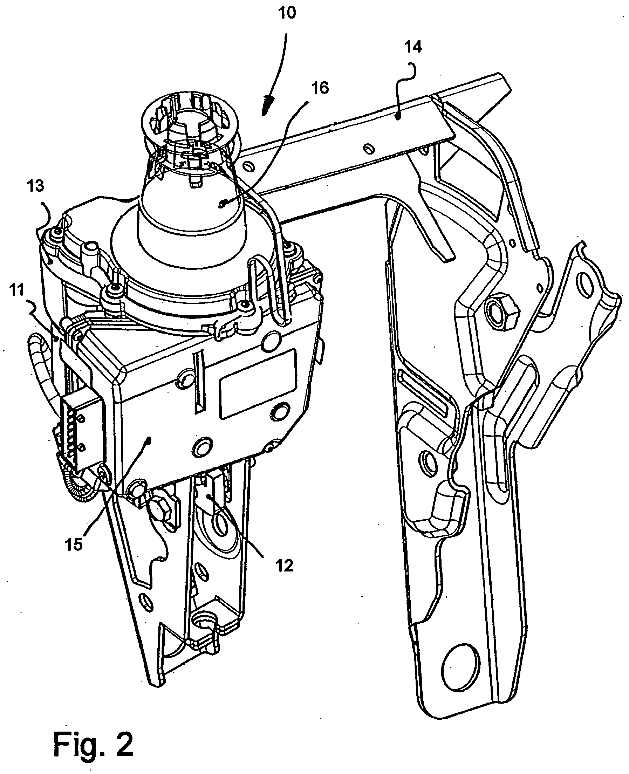

In der Fig. 2 ist ein elektrischer Aktuator 10 der Feststellbremse in einer perspektivischen Darstellung dargestellt. Der elektrische Aktuator 10 umfasst einen Elektromotor 11 als Antrieb und zum Aufbringen der Betätigungskraft zur Beaufschlagung der Feststellbremse in die Bremsstellung, der über ein Untersetzungsgetriebe mit einem Gewindespindeltrieb in trieblicher Verbindung steht. Der Gewindespindeltrieb ist mit einem Halter 12, beispielsweise einem Zuganker, versehen, an dem ein Bremsseilzug, beispielsweise ein Bowdenzug, als Übertragungsmittel befestigt werden kann, der die Verbindung zu der Feststellbremse herstellt. Das Untersetzungsgetriebe und der Gewindespindeltrieb sind in einem Getriebegehäuse 13 des Aktuators 10 angeordnet, das mittels einer Befestigungskonsole 14 in dem Vorderaufbau des Gabelstaplers 1 im Bereich der Bedienkonsole 6 befestigt werden kann.

Der elektrische Aktuator 10 umfasst weiterhin eine elektronische Steuerung 15 zur Ansteuerung des Elektromotors 11, die mit einer elektronischen Fahrzeugsteuerung des Fahrzeugs und Sensoreinrichtungen zur Erfassung verschiedener Betriebszustände des Fahrzeugs in Wirkverbindung steht. Mittels der elektronischen Steuerung 15 ist eine automatische Ansteuerung des Elektromotors 11 zur automatischen Betätigung der Feststellbremse in die Bremsstellung bzw. Lösestellung möglich, um Brems- und Lösefunktionen in Abhängigkeit von verschiedenen Betriebszuständen und/oder Fahrzuständen bzw. Fahrzeugszustände des Fahrzeugs zu erzielen. Die Feststellbremse kann durch den Aktuator 10 als Hilfsbetriebsbremse mit einer dosierten Bremskraft verwendet werden. Zur stromlosen manuellen Betätigung der Feststellbremse bei fehlender Energieversorgung ist ein Handrad 16 vorgesehen.

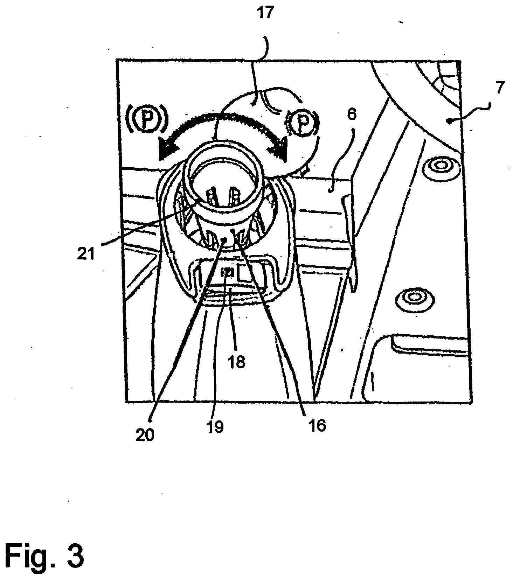

Die Fig. 3 zeigt eine Ansicht einer Bedienkonsole 6 der mobilen Arbeitsmaschine. An der von dem Armaturenbrett gebildeten Bedienkonsole 6 ist seitlich neben dem Lenkrad 7 unterhalb einer von einem Deckel gebildeten, entfernbaren Abdeckung 17 eine Betätigungseinrichtung für die Feststellbremse mit dem Aktuator 10 angeordnet.

Zur manuellen Betätigung der Feststellbremse ist ein Tastschalter 18 mit einer LED 19 als Kontrollleuchte vorgesehen, so dass durch Betätigen des Tastschalters 18 die Feststellbremse durch Ansteuerung des Aktuators 10 in die Bremsstellung bzw. die Lösestellung betätigt werden kann.

Das Handrad 16 dient zur stromlosen manuellen Betätigung der Feststellbremse bei fehlender Energieversorgung. Hierzu ist in Fig.3 die Abdeckung 17 seitlich verschwenkt und das Handrad 16 mit Mitnehmerzungen 20 auf Einbuchtungen eines Mitnehmers aufgesteckt, so dass der Aktuator 10 durch Drehen an einem Griffelement 21 des Handrades 16 betätigt werden kann. Dabei ist das Handrad 16 gegenüber der Darstellung in Fig. 1 in seiner Längsachse um 180° gedreht.

Die Steuerung 15 erfasst zur automatischen Betätigung der Feststellbremse in die Bremsstellung bei stehendem Gabelstapler 1 als Bremszustände, ob ein Signal eines Belegungssensors des Fahrersitzes 3 als Fahrerarbeitsplatz 9 länger als eine Belegungstoleranzzeit fehlt, oder ob alternativ ein Ausschaltsignal einer beispielsweise als Schlüsselschalter oder als Codeeingabeeinrichtung ausgebildeten Zugangskontrolleinrichtung, oder ob alternativ ein Betätigungssignal eines Not-Aus-Schalters vorliegt, sofern das Flurförderzeug mit einem Not-Aus-Schalter versehen ist. Bei stehendem Gabelstapler wird weiterhin von der Steuerung ein Bremszustand erfasst, wenn ein Fahrgeschwindigkeitsgeber, beispielsweise ein Fahrpedal, länger als eine Fahrsignalwartezeit nicht betätigt wurde. Liegt ein solcher Bremszustand vor, so treibt der Elektromotor 11 den Gewindespindeltrieb an, der über den Bremsseilzug die Feststellbremse in eine Bremsstellung betätigt. Sofern die Feststellbremse durch Betätigen der beispielsweise von einem Schlüsselschalter gebildeten Zugangskontrolleinrichtung, durch Betätigen des Not-Aus-Schalters - sofern ein derartiger vorhanden ist - oder durch Betätigen des Tastschalters 18 in die Bremsstellung betätigt wurde, kann die Feststellbremse durch Betätigen des Tastschalters 18 in die Lösestellung beaufschlagt werden. Dabei muss bei dem vorliegenden Ausführungsbeispiel als Freigabesignal für das Beaufschlagen in die Lösestellung das Signal des Belegungssensors des Fahrerarbeitsplatzes 9 anzeigen, dass der Fahrerarbeitsplatz belegt ist, es darf der gegebenenfalls vorhandene Not-Aus-Sachalter nicht betätigt und muss die beispielsweise von dem Schlüsselschalter gebildete Zugangskontrolleinrichtung eingeschaltet bzw. entsprechend aktiviert sein. Von der Steuerung 15 kann bei einem der zuvor genannten Bremszustände und der daraufhin erfolgenden automatischen Betätigung der Feststellbremse in die Bremsstellung eine Fahrzeugneigung, beispielsweise eine Steigung berücksichtigt werden, um bei entlastetem Fahrerarbeitsplatz die Feststellbremse sofort in die Bremsstellung zu betätigen bzw. bei unbetätigtem Fahrsignalgeber die Fahrsignalwartezeit auf wenige Sekunden zur Betätigung der Feststellbremse in die Bremsstellung zu verkürzen.

Wenn nach einer automatischen Betätigung der Feststellbremse der Fahrer einen Fahrtrichtungsschalter betätigt und wiederum danach das Fahrpedal betätigt, so steuert die Steuerung 15 den Elektromotor 11 so, dass die Feststellbremse in eine Lösestellung betätigt wird. Dadurch wird in normalem Betrieb die Feststellbremse nur gelöst, wenn ein gültiges Fahrtrichtungssignal vorliegt und im vorliegenden Beispiel auch als Freigabesignale der Fahrerarbeitsplatz belegt, der gegebenenfalls vorhandene Not-Aus-Schalter nicht betätigt und der Schlüsselschalter bzw. die Zugangskontrolleinrichtung aktiviert bzw. eingeschaltet ist. Es müssen somit zwei Signale, das Signal des Fahrtrichtungsschalters und des Fahrpedals vorliegen. Da es zu keinem Lösen der Feststellbremse nur aufgrund eines Signals allein kommen kann, wird das Risiko eines unbeabsichtigten Lösens der Feststellbremse verringert. Bei einem Ausführungsbeispiel mit einer Zweipedalsteuerung, die ein Fahrpedal für Vorwärtsfahrt und ein Fahrpedal für Rückwärtsfahrt aufweist und entsprechend keinen Fahrtrichtungsschalter, muss der Tastschalter betätigt werden.

Von der Steuerung 15 wird ein Bremszustand, bei dem bei stehender mobiler Arbeitsmaschine ein Signal des Belegungssensors des Fahrerarbeitsplatzes 9, insbesondere des Fahrersitzes 3, dass der Fahrerarbeitsplatz 9 nicht belegt ist, nach Ablauf einer Belegungstoleranzzeit erfasst wird, als Assistenzbremsbetriebsmodus erkannt. Das heißt, die Feststellbremse wurde angezogen, weil der Fahrer länger als die Belegungstoleranzzeit sich nicht auf dem Fahrersitz 3 befand und den Gegengewichtsgabelstapler 1 verlassen hat. Alternativ wird ein Bremszustand, bei dem ein Signal, dass der Fahrerarbeitsplatz 9 belegt ist und/oder gleichzeitig ein fehlendes Signal eines Fahrgeschwindigkeitsgebers zur Steuerung der Fahrgeschwindigkeit der mobilen Arbeitsmaschine, insbesondere des Fahrpedals, nach einer Fahrsignalwartezeit erfasst wird, von der Steuerung 15 als Assistenzbremsbetriebsmodus erkannt. In diesem Fall erfolgte die Abbremsung, da der Gegengewichtsgabelstapler 1 nicht bewegt wird und beispielsweise die Arbeitshydraulik, etwa eine Hubvorrichtung des Hubmasts 5, von dem Fahrer bedient wird.

Wenn die Feststellbremse in einem Assistenzbremsbetriebsmodus ist, nachdem sie in die Bremsstellung betätigt wurde, da der Fahrersitz 3 länger als die Belegungstoleranzzeit nicht belegt war oder das Fahrpedal länger als eine Fahrsignalwartezeit, die bevorzugt 1 Minute beträgt, nicht betätigt wurde, so betätigt die Steuerung 15 die Feststellbremse in die Lösestellung, wenn bei einer Einpedalsteuerung die Fahrtrichtung an dem Fahrtrichtungsschalter definiert eingestellt ist und das Fahrpedal betätigt wird bzw. bei einer Zweipedalsteuerung ein Vorwärtspedal bzw. eine Rückwärtspedal betätigt wird. Dabei ist abweichend von dem normalen Betrieb kein zweites Signal erforderlich und es kann in diesen bei dem Gabelstapler 1 häufig auftretenden Fällen die Bedienung noch weiter vereinfacht und der Bedienungskomfort erhöht werden.

Bei einer Betätigung des Tastschalters 18 leuchtet die LED 19 bei angezogener Feststellbremse mit Dauerlicht. Ebenso leuchtet die LED 19, wenn die Feststellbremse angezogen wurde, da der Fahrersitz 3 länger als die Belegungstoleranzzeit nicht belegt war, das Fahrpedal länger als die Fahrsignalwartezeit nicht bedient wurde, der Schlüsselschalter bzw. die Zugangskontrolleinrichtung oder der gegebenenfalls vorhandene Not-Aus-Schalter betätigt wurde.

Zum Lösen der Feststellbremse müssen bei einer Einpedalsteuerung der Fahrtrichtungsschalter und nachfolgend das Fahrpedal betätigt werden. Die Feststellbremse wird gelöst und die LED 19 erlischt. Bei einer Zweipedalsteuerung kann der Tastschalter 18 betätigt werden, um die Feststellbremse zu lösen.

Erfolgte das Anziehen der Feststellbremse zuvor aufgrund einer Assistenzbremsbetriebsmodus, da der Fahrersitz 3 nicht belegt war oder das Fahrerpedal nicht betätigt wurde, so reicht zum Lösen der Feststellbremse das Betätigen des Fahrpedals bei der Einpedalbedienung und bei der Zweipedalbedienung das Betätigen von Vorwärts-/ oder Rückwärtspedal bei zusätzlich vorhandenen Freigabesignalen.

Nach einer Aktivierung des Not-Aus-Schalters muss das Fahrpedal zweimal betätigt werden, um die Feststellbremse zu lösen.

Wird der Tastschalter 18 während einer Fahrbewegung betätigt oder der Fahrersitz 3 während einer Fahrbewegung des Gabelstaplers 1 länger als die Belegungstoleranzzeit, z.B. 1 bis 2 Sekunden, entlastet, wird die Arbeitsmaschine mit einer gesteuerten Bremskraft abgebremst und nach dem Fahrzeugstillstand die Feststellbremse mit voller Bremskraft angezogen. Während des gesteuerten Abbremsens erfolgt bevorzugt das Abbremsen über den Fahrantrieb und die Fahrantriebsmotoren. Solange der Fahrantrieb das gesteuerte Abbremsen übernehmen kann und die Fahrzeuggeschwindigkeit noch nicht nahe Null ist, wird die Feststellbremse nicht angesteuert und befindet sich in der Lösestellung. Das gesteuerte Abbremsen über die Feststellbremse durch entsprechende Ansteuerung des Aktuators 10 und Beaufschlagen der Feststellbremse in Richtung der Bremsstellung erfolgt beispielsweise in Fällen, in denen eine Verbindung zu der Fahrzeugsteuerung unterbrochen ist oder der Fahrantrieb die gesteuerte Abbremsung der Arbeitsmaschine nicht übernehmen kann, beispielsweise bei betätigtem Not-Aus-Schalter - sofern ein derartiger vorhanden ist -, bei betätigter Zugangskontrolleinrichtung, beispielsweise des Schlüsselschalters, (Ausschaltsignal) oder einem Fehler im Fahrantrieb.

Sollte ein Ausfall der Verbindung zu der Fahrzeugsteuerung auftreten, beispielsweise ein Abreißen der CAN-Busverbindung, kann durch Betätigen bzw. Loslassen des Tastschalters die Feststellbremse dosiert betätigt werden.

Bei einer Betätigung der beispielsweise von dem Schlüsselschalter gebildeten Zugangskontrolleinrichtung oder des gegebenenfalls vorhandenen Not-Aus-Schalters während einer Fahrbewegung erfolgt ein Betätigen der Feststellbremse erst nach einem ungebremsten Ausrollen des Gabelstaplers 1 im Stillstand. Auch in diesen Fällen leuchtet im Stillstand des Gabelstaplers, sobald die Feststellbremse voll angezogen wird, die LED 19 mit Dauerlicht.

## Patentansprüche

1. Steuerungsverfahren für eine automatisiert durch eine Steuerung (15) betätigbare Feststellbremse einer mobilen Arbeitsmaschine, insbesondere ein Flurförderzeug, wobei die Feststellbremse mittels eines elektrischen Aktuators (10) betätigbar ist, der mit einem Übertragungsmittel, insbesondere einem Bremsseil, mit der Feststellbremse zu deren Betätigung in Wirkverbindung steht und die Bremsbetätigungskraft der Feststellbremse aufbringt, und die Steuerung (15) Bremszustände erfasst, in denen die Steuerung (15) die Feststellbremse durch den Aktuator (10) in eine Bremsstellung betätigt,
**dadurch gekennzeichnet,**
**dass** bei stehender mobiler Arbeitsmaschine die Steuerung (15) mindestens die folgenden Bremszustände erfasst:
- ein Signal eines Belegungssensors eines Fahrerarbeitsplatzes (9), insbesondere eines Fahrersitzes (3), dass der Fahrerarbeitsplatz (9) nicht belegt ist, nach dem Ablauf einer Belegungstoleranzzeit,
- ein Ausschaltsignal einer Zugangskontrolleinrichtung, insbesondere eines Schlüsselschalters oder einer Codeeingabevorrichtung,
oder mindestens alle folgenden Bremszustände erfasst:
- ein Signal eines Belegungssensors eines Fahrerarbeitsplatzes (9), insbesondere eines Fahrersitzes (3), dass der Fahrerarbeitsplatz (9) nicht belegt ist, nach dem Ablauf einer Belegungstoleranzzeit,
- ein Ausschaltsignal einer Zugangskontrolleinrichtung, insbesondere eines Schlüsselschalters oder einer Codeeingabevorrichtung,
- ein Betätigungssignal eines Not-Aus-Schalters.

2. Steuerungsverfahren nach Anspruch 1,
**dadurch gekennzeichnet,**
**dass** die Steuerung (15) bei stehender mobiler Arbeitsmaschine ein fehlendes Signal eines Fahrgeschwindigkeitsgebers zur Steuerung der Fahrgeschwindigkeit der mobilen Arbeitsmaschine, insbesondere eines Fahrpedals, nach dem Ablauf einer Fahrsignalwartezeit, insbesondere im Bereich von 1 Minute, als Bremszustand erfasst.

3. Steuerungsverfahren nach Anspruch 1 oder 2,
**dadurch gekennzeichnet,**
**dass** die Fahrbewegungen der mobilen Arbeitsmaschine über eine Einpedalsteuerung gesteuert werden können, bei der über einen Fahrtrichtungsschalter eine Fahrtrichtung vorgebbar ist und über ein Fahrpedal ein Fahrsignal eingebbar ist, wobei bei stehender mobiler Arbeitsmaschine ein Betätigungssignal des Fahrtrichtungsschalters und ein nachfolgendes Betätigen des Fahrpedals als ein Bremslösezustand erfasst wird und die Steuerung die Feststellbremse durch den Aktuator (10) in die Lösestellung betätigt.

4. Steuerungsverfahren nach einem der Ansprüche 1 bis 3,
**dadurch gekennzeichnet,**
**dass** durch einen Feststellbremsschalter, insbesondere einen Tastschalter (18), ein Bremslösezustand, in dem die Steuerung die Feststellbremse durch den Aktuator in die Lösestellung betätigt, oder ein Bremszustand manuell eingebbar ist.

5. Steuerungsverfahren nach Anspruch 4,
**dadurch gekennzeichnet,**
**dass** die Steuerung, insbesondere über ein CAN-Bussystems, mit einer Fahrzeugsteuerung der mobilen Arbeitsmaschine verbunden ist und bei einer Unterbrechung der Verbindung die Feststellbremse dosiert betätigbar ist, insbesondere durch die Dauer des Betätigens oder Loslassens des Feststellbremsschalters.

6. Steuerungsverfahren nach Anspruch 4 oder 5,
**dadurch gekennzeichnet,**
**dass** bei Betätigung des Feststellbremsschalters bei fahrender Arbeitsmaschine die Steuerung (15) einen Bremszustand erfasst und in einem ersten Schritt den Aktuator (10) so steuert, dass die mobile Arbeitsmaschine mit einer gesteuerten, insbesondere weniger als die Hälfte der maximalen Bremskraft betragenden, Bremskraft bis zum Stillstand abgebremst wird und in einem zweiten Schritt den Aktuator (10) so steuert, dass die Feststellbremse mit voller Bremskraft bei stehender mobiler Arbeitsmaschine in die Bremsstellung betätigt wird.

7. Steuerungsverfahren nach einem der Ansprüche 1 bis 6,
**dadurch gekennzeichnet,**
**dass** die Steuerung bei fahrender Arbeitsmaschine das Signal des Belegungssensors des Fahrerarbeitsplatzes (9), insbesondere eines Fahrersitzes (3), dass der Fahrerarbeitsplatz (9) nicht belegt ist, nach einer Belegungstoleranzzeit, insbesondere nach 1 bis 2 Sekunden, als Bremszustand erfasst und in einem ersten Schritt den Aktuator (10) so steuert, dass die mobile Arbeitsmaschine mit einer gesteuerten, insbesondere weniger als die Hälfte der maximalen Bremskraft betragenden, Bremskraft bis zum Stillstand abgebremst wird und in einem zweiten Schritt den Aktuator (10) so steuert, dass die Feststellbremse mit voller Bremskraft bei stehender mobiler Arbeitsmaschine in die Bremsstellung betätigt wird.

8. Steuerungsverfahren nach einem der Ansprüche 1 bis 7,
**dadurch gekennzeichnet,**
**dass** die mobile Arbeitsmaschine ein Flurförderzeug, insbesondere ein Gabelstapler (1), ist und die Steuerung die Fahrgeschwindigkeit des Flurförderzeugs, insbesondere über ein CAN-Bussystem, erhält und abhängig von der Fahrgeschwindigkeit und mindestens einem weiteren Parameter, wie einer aufliegenden Last und/oder einer Hubhöhe und/oder einer Neigung des Flurförderzeugs und/oder einer Beschleunigung und/oder einer Querbeschleunigung und/oder einer durch einen Fahrer vorgegebenen Fahrgeschwindigkeit und/oder einem Lenkwinkel die Notwendigkeit einer Geschwindigkeitsreduzierung aus Sicherheitsgründen bestimmt und den Aktuator so steuert, dass das Flurförderzeug mit einer gesteuerten Bremskraft abgebremst wird.

9. Steuerungsverfahren nach Anspruch 8,
**dadurch gekennzeichnet,**
**dass** das Flurförderzeug mittels elektrischer Antriebsmotoren angetrieben wird und als Parameter der Betriebszustand der Antriebsmotoren, insbesondere deren Stromaufnahme, erfasst wird.

10. Steuerungsverfahren nach Anspruch 8 oder 9,
**dadurch gekennzeichnet,**
**dass** die Steuerung (15) die Fahrgeschwindigkeit und die Beschleunigung des Flurförderzeugs erfasst und aus dem Verhältnis von Beschleunigung zu Fahrgeschwindigkeit die Notwendigkeit einer Geschwindigkeitsreduzierung aus Sicherheitsgründen bestimmt.

11. Steuerungsverfahren nach einem der Ansprüche 1 bis 10,
**dadurch gekennzeichnet,**
**dass** die Steuerung in Abhängigkeit von Signalen von Sende-/Empfangseinheiten in der Umgebung der mobilen Arbeitsmaschine, insbesondere von RFID-Transpondern, die mobile Arbeitsmaschine mit einer gesteuerten Bremskraft abbremst.

12. Steuerungsverfahren nach Anspruch 11,
**dadurch gekennzeichnet,**
**dass** Sende-/Empfangseinheiten in der Umgebung Kollisionsvermeidungssystemen und/oder Personenerkennungssystemen zugeordnet sind.

13. Steuerungsverfahren nach einem der Ansprüche 1 bis 12,
**dadurch gekennzeichnet,**
**dass** die Steuerung in Abhängigkeit von Kollisionsvermeidungssystemen und/oder Personenerkennungssystemen der mobilen Arbeitsmaschine die mobile Arbeitsmaschine mit einer gesteuerten Bremskraft abbremst.

14. Steuerungsverfahren nach einem der Ansprüche 5 bis 13,
**dadurch gekennzeichnet,**
**dass** die gesteuerten Bremskraft nicht durch die Feststellbremse erzeugt wird, sondern durch einen Fahrantrieb der mobilen Arbeitsmaschine, der eine Bremskraft erzeugen kann, insbesondere durch elektrische Antriebsmotoren, die als Generatoren eine Bremskraft erzeugen können.

15. Steuerungsverfahren nach einem der Ansprüche 1 bis 14,
**dadurch gekennzeichnet,**
**dass** die Steuerung (15) bei fahrender mobiler Arbeitsmaschine nach einem Ausschaltsignal der Zugangskontrolleinrichtung den Stillstand der mobilen Arbeitsmaschine als Bremszustand erfasst.

16. Steuerungsverfahren nach einem der Ansprüche 1 bis 15,
**dadurch gekennzeichnet,**
**dass** die Steuerung (15) bei fahrender mobiler Arbeitsmaschine nach einem Betätigungssignal des Not-Aus-Schalters erst den Stillstand der mobilen Arbeitsmaschine als Bremszustand erfasst.

17. Steuerungsverfahren nach einem der Ansprüche 1 bis 16,
**dadurch gekennzeichnet,**
**dass** nach Bremszuständen, bei denen bei stehender mobiler Arbeitsmaschine ein Signal eines Belegungssensors eines Fahrerarbeitsplatzes (9), insbesondere eines Fahrersitzes (3), dass der Fahrerarbeitsplatz (9) nicht belegt ist, nach Ablauf einer Belegungstoleranzzeit erfasst wird oder
ein Signal, dass der Fahrerarbeitsplatz (9) belegt und gleichzeitig ein fehlendes Signal eines Fahrgeschwindigkeitsgebers zur Steuerung der Fahrgeschwindigkeit der mobilen Arbeitsmaschine, insbesondere eines Fahrpedals, nach einer Fahrsignalwartezeit erfasst wird,
von der Steuerung (15) ein Assistenzbremsbetriebsmodus erkannt wird,
in dem die Feststellbremse von der Steuerung (15) bei einer Betätigung des Fahrgeschwindigkeitsgebers in eine Lösestellung betätigt wird.

18. Steuerungsverfahren nach Anspruch 17,
**dadurch gekennzeichnet,**
**dass** die Fahrbewegungen der Arbeitsmaschine über eine Einpedalsteuerung gesteuert werden können, bei der über einen Fahrtrichtungsschalter eine Fahrtrichtung vorgebbar ist und über ein Fahrpedal als Fahrgeschwindigkeitsgeber ein Fahrsignal eingebbar ist, wobei bei stehender mobiler Arbeitsmaschine im Assistenzbremsbetriebsmodus bei vorgegebener Fahrtrichtung bei einem Betätigen des Fahrpedals die Feststellbremse in eine Lösestellung von der Steuerung (15) betätigt wird.

19. Steuerungsverfahren nach Anspruch 17,
**dadurch gekennzeichnet,**
**dass** die Fahrbewegungen der Arbeitsmaschine über eine Zweipedalsteuerung gesteuert werden können, bei der ein Vorwärtspedal als Fahrgeschwindigkeitsgeber ein Fahrsignal für Vorwärtsfahrt und ein Rückwärtspedal als Fahrgeschwindigkeitsgeber ein Fahrsignal für Rückwärtsfahrt erzeugt, wobei bei stehender mobiler Arbeitsmaschine im Assistenzbremsbetriebsmodus bei einem Betätigen von Vorwärtspedal und/oder Rückwärtspedal die Feststellbremse in eine Lösestellung von der Steuerung (15) betätigt wird.

20. Steuerungsverfahren nach einem der Ansprüche 1 bis 19,
**dadurch gekennzeichnet,**
**dass** die Steuerung (15) nach einem Bremszustand aufgrund eines Betätigungssignals des Not-Aus-Schalters erst nach zweimaligem Betätigungssignal eines Fahrgeschwindigkeitsgebers zur Steuerung der Fahrgeschwindigkeit der mobilen Arbeitsmaschine, insbesondere eines Fahrpedals, die Feststellbremse in eine Lösestellung betätigt.

21. Mobile Arbeitsmaschine, insbesondere Flurförderzeug, mit einer durch eine Steuerung (15) mittels eines elektrischen Aktuator (10) betätigbaren Feststellbremse, wobei der Aktuator (10) mit einem Übertragungsmittel, insbesondere einem Bremsseil, mit der Feststellbremse zu deren Betätigung in Wirkverbindung steht und die Bremsbetätigungskraft der Feststellbremse aufbringt, und die Steuerung (15) ein Verfahren nach einem der vorhergehenden Ansprüche durchführt.

22. Mobile Arbeitsmaschine nach Anspruch 21,
**dadurch gekennzeichnet,**
**dass** der Aktuator (10) einen Elektromotor (11) und einen mit dem Elektromotor (11) trieblich verbundenen Gewindespindeltrieb, insbesondere einen selbsthemmenden Gewindespindeltrieb, umfasst, wobei der Gewindespindeltrieb auf das Übertragungsmittel wirkt.

## Claims

1. Control method for a parking brake, which can be actuated in an automated fashion by a controller (15), of a mobile working machine, in particular an industrial truck, wherein the parking brake can be actuated by means of an electric actuator (10) which is operatively connected to the parking brake with a transmission means, in particular with a brake cable, for actuating said parking brake and which electric actuator applies the braking actuation force of the parking brake, and the controller (15) detects braking states in which the controller (15) actuates the parking brake into a braking position by means of the actuator (10),
**characterized**
**in that** when the mobile working machine is stationary the controller (15) detects at least the following braking states:
- a signal of an occupation sensor of a driver's work station (9), in particular of a driver's seat (3), indicating that the driver's work station (9) is not occupied, after the expiry of an occupation tolerance time,
- a switch-off signal of an access control device, in particular of a key switch or of a code input device,
or detects at least all of the following braking states:
- a signal of an occupation sensor of a driver's work station (9), in particular of a driver's seat (3), indicating that the driver's work station (9) is not occupied, after the expiry of an occupation tolerance time,
- a switch-off signal of an access control device, in particular of a key switch or of a code input device,
- an actuation signal of an emergency off switch.

2. Control method according to Claim 1,
**characterized**
**in that** when the mobile working machine is stationary the controller (15) detects a lack of a signal of a velocity encoder for controlling the velocity of the mobile working machine, in particular of an accelerator pedal, after the expiry of a travel signal waiting time, in particular in the region of 1 minute, as braking state.

3. Control method according to Claim 1 or 2,
**characterized**
**in that** the travel movements of the mobile working machine can be controlled by means of a single pedal controller, in which a direction of travel can be predefined by means of a direction of travel switch, and a travel signal can be input by means of an accelerator pedal, wherein when the mobile working machine is stationary an actuation signal of the direction of travel switch and subsequent actuation of the accelerator pedal are detected as a brake release state, and the controller actuates the parking brake into the release position by means of the actuator (10).

4. Control method according to one of Claims 1 to 3,
**characterized**
**in that** by means of a parking brake switch, in particular a pushbutton switch (18), a brake release state, in which the controller actuates the parking brake into the release position by means of the actuator, or a braking state can be inputted manually.

5. Control method according to Claim 4,
**characterized**
**in that** the controller is connected to a vehicle controller of the mobile working machine, in particular via a CAN bus system, and when the connection is interrupted the parking brake can be actuated in a metered fashion, in particular by the duration of the actuation or release of the parking brake switch.

6. Control method according to Claim 4 or 5,
**characterized**
**in that** when the parking brake switch is actuated when the working machine is travelling the controller (15) detects a braking state, and in a first step controls the actuator (10) in such a way that the mobile working machine is braked to the stationary state with a controlled braking force, in particular one which is less than half the maximum braking force, and in a second step controls the actuator (10) in such a way that the parking brake is actuated into the braking position with full braking force when the mobile working machine is stationary.

7. Control method according to one of Claims 1 to 6,
**characterized**
**in that** when the working machine is travelling the controller detects the signal of the occupation sensor of the driver's work station (9), in particular of a driver's seat (3) indicating that the driver's work station (9) is not occupied as a braking state, after an occupation tolerance time in particular after 1 to 2 seconds, and in a first step controls the actuator (10) in such a way that the mobile working machine is braked to the stationary state with a controlled braking force, in particular one which is less than half the maximum braking force, and in a second step controls the actuator (10) in such a way that the parking brake is actuated into the braking position with full braking force when the mobile working machine is stationary.

8. Control method according to one of Claims 1 to 7,
**characterized**
**in that** the mobile working machine is an industrial truck, in particular a fork lift truck (1), and the controller receives the velocity of the industrial truck, in particular via a CAN bus system, and determines the need for a reduction in the speed for safety reasons as a function of the velocity and at least one further parameter such as an applied load and/or a lifting height and/or an inclination of the industrial truck and/or an acceleration and/or a transverse acceleration and/or a velocity predefined by a driver and/or a steering angle, and controls the actuator in such a way that the industrial truck is braked with a controlled braking force.

9. Control method according to Claim 8,
**characterized**
**in that** the industrial truck is driven by means of electric drive motors and the operating state of the drive motors, in particular their power consumption, is detected as a parameter.

10. Control method according to Claim 8 or 9,
**characterized**
**in that** the controller (15) detects the velocity and the acceleration of the industrial truck and determines the need for a reduction in the speed for safety reasons from the ratio of acceleration to velocity.

11. Control method according to one of Claims 1 to 10,
**characterized**
**in that** the controller brakes the mobile working machine with a controlled braking force as a function of signals from transmitter/receiver units in the surroundings of the mobile working machine, in particular from RFID transponders.

12. Control method according to Claim 11,
**characterized**
**in that** transmitter/receiver units in the surroundings are assigned to collision-avoidance systems and/or person-detection systems.

13. Control method according to one of Claims 1 to 12,
**characterized**
**in that** the controller brakes the mobile working machine with a controlled braking force as a function of collision-avoidance systems and/or person-detection systems of the mobile working machine.

14. Control method according to one of Claims 5 to 13,
**characterized**
**in that** the controlled braking force is not generated by the parking brake but rather by a drive of the mobile working machine, which drive can generate a braking force, in particular by means of electric drive motors which can generate a braking force as generators.

15. Control method according to one of Claims 1 to 14,
**characterized**
**in that** when the mobile working machine is travelling the controller (15) detects the stationary state of the mobile working machine as a braking state after a switch-off signal of the access control device.

16. Control method according to one of Claims 1 to 15,
**characterized**
**in that** when the mobile working machine is travelling the controller (15) does not detect the stationary state of the mobile working machine as a braking state until after an actuation signal of the emergency off switch.

17. Control method according to one of Claims 1 to 16,
**characterized**
**in that** after braking states in which a signal of an occupation sensor of a driver's work station (9), in particular of a driver's seat (3), indicating that the driver's work station (9) is not occupied, is detected after the expiry of an occupation tolerance time when the mobile working machine is stationary, or
a signal indicating that the driver's work station (9) is occupied and at the same time a lack of a signal of a velocity encoder for controlling the velocity of the mobile working machine, in particular of an accelerator pedal, is detected after a travel signal waiting time,
the controller (15) detects an assistance braking operating mode in which the parking brake is actuated by the controller (15) into a release position when the velocity encoder is actuated.

18. Control method according to Claim 17,
**characterized**
**in that** the travel movements of the working machine can be controlled by means of a single pedal controller, in which a direction of travel can be predefined by means of a direction of travel switch and a travel signal can be input by means of an accelerator pedal as a velocity encoder, wherein when the mobile working machine is stationary in the assistance braking operating mode the parking brake is actuated into a release position by the controller (15) when the accelerator pedal is actuated at a predefined direction of travel.

19. Control method according to Claim 17,
**characterized**
**in that** the travel movements of the working machine can be controlled by means of a two pedal controller, in which a forward pedal generates, as velocity encoder, a travel signal for forward travel, and a reverse pedal generates, as velocity encoder, a travel signal for reverse travel, wherein when the mobile working machine is stationary in the assistance braking operating mode the parking brake is actuated into a release position by the controller (15) when the forward pedal and/or reverse pedal is/are actuated.

20. Control method according to one of Claims 1 to 19,
**characterized**
**in that** after a braking state owing to an actuation signal of the emergency off switch, the controller (15) does not actuate the parking brake into a release position until after the actuation signal of a velocity encoder for controlling the velocity of the mobile working machine, in particular of an accelerator pedal, has occurred twice.

21. Mobile working machine, in particular industrial truck, having a parking brake which can be actuated by a controller (15) by means of an electric actuator (10), wherein the actuator (10) is operatively connected to the parking brake with a transmission means, in particular with a brake cable, for actuating said parking brake and said actuator applies the brake actuation force of the parking brake, and the controller (15) carries out a method according to one of the preceding claims.

22. Mobile working machine according to Claim 21,
**characterized**
**in that** the actuator (10) comprises an electric motor (11) and a threaded spindle drive, in particular a self-locking threaded spindle drive, which has a drive connection to the electric motor (11), wherein the threaded spindle drive acts on the transmission means.

## Revendications

1. Procédé de commande pour un frein de stationnement automatisé pouvant être actionné par une commande (15) d'une machine de travail mobile, notamment un chariot de manutention, le frein de stationnement pouvant être actionné au moyen d'un actionneur électrique (10) qui se trouve en liaison fonctionnelle avec le frein de stationnement, en vue de son actionnement, par un moyen de transmission, notamment un câble de frein, et qui applique la force d'actionnement de frein au frein de stationnement, et la commande (15) détectant les états de freinage dans lesquels la commande (15) actionne le frein de stationnement dans une position freinée par le biais de l'actionneur (10),
**caractérisé en ce que**
lorsque la machine de travail mobile est immobile, la commande (15) détecte au moins les états de freinage suivants :
- un signal d'un capteur d'occupation d'un poste de travail de conducteur (9), notamment d'un siège de conducteur (3), indiquant que le poste de travail de conducteur (9) n'est pas occupé, après l'écoulement d'un temps de tolérance d'occupation,
- un signal de mise hors circuit d'un dispositif de contrôle d'accès, notamment d'un commutateur à clé ou d'un arrangement de saisie de code,
ou détecte au moins tous les états de freinage suivants :
- un signal d'un capteur d'occupation d'un poste de travail de conducteur (9), notamment d'un siège de conducteur (3), indiquant que le poste de travail de conducteur (9) n'est pas occupé, après l'écoulement d'un temps de tolérance d'occupation,
- un signal de mise hors circuit d'un dispositif de contrôle d'accès, notamment d'un commutateur à clé ou d'un arrangement de saisie de code,
- un signal d'actionnement d'un commutateur d'arrêt d'urgence.

2. Procédé de commande selon la revendication 1, **caractérisé en ce que** la commande (15), lorsque la machine de travail mobile est immobile, détecte l'absence d'un signal d'un transmetteur de vitesse de déplacement servant à commander la vitesse de déplacement de la machine de travail mobile, notamment d'une pédale d'accélérateur, comme un état de freinage après l'écoulement d'un temps d'attente de signal de déplacement, notamment de l'ordre d'une minute.

3. Procédé de commande selon la revendication 1 ou 2, **caractérisé en ce que** les mouvements de déplacement de la machine de travail mobile peuvent être commandés par le biais d'une commande à pédale unique, avec laquelle un sens de déplacement peut être prédéfini par le biais d'un commutateur de sens de déplacement et un signal de déplacement peut être entré par le biais d'une pédale d'accélérateur, lorsque la machine de travail mobile est immobile, un signal d'actionnement du commutateur de sens de déplacement et un actionnement de la pédale d'accélérateur subséquent étant détectés comme un état de desserrage du frein et la commande actionnant le frein de stationnement dans la position desserrée par le biais de l'actionneur (10).

4. Procédé de commande selon l'une des revendications 1 à 3, **caractérisé en ce qu'**un état de desserrage du frein, dans lequel la commande actionne le frein de stationnement dans la position desserrée par le biais de l'actionneur, ou un état de freinage peut être saisi manuellement par un commutateur de frein de stationnement, notamment un commutateur à poussoir (18).

5. Procédé de commande selon la revendication 4, **caractérisé en ce que** la commande est reliée à une commande de véhicule de la machine de travail mobile, notamment par le biais d'un système de bus CAN, et dans le cas d'une interruption de la connexion, le frein de stationnement peut être actionné de manière dosée, notamment par la durée de l'actionnement ou du relâchement du commutateur de frein de stationnement.

6. Procédé de commande selon la revendication 4 ou 5, **caractérisé en ce que** lors de l'actionnement du commutateur de frein de stationnement alors que la machine de travail mobile se déplace, la commande (15) détecte un état de freinage et, dans une première étape, commande l'actionneur (10) de telle sorte que la machine de travail mobile est freinée jusqu'à l'immobilisation avec une force de freinage commandée, notamment égale à moins de la moitié de la force de freinage maximale, et, dans une deuxième étape, commande l'actionneur (10) de telle sorte que le frein de stationnement est actionné avec la pleine force de freinage en position de freinage lorsque la machine de travail mobile est immobile.

7. Procédé de commande selon l'une des revendications 1 à 6, **caractérisé en ce que** lorsque la machine de travail se déplace, la commande détecte le signal du capteur d'occupation du poste de travail de conducteur (9), notamment d'un siège de conducteur (3), indiquant que le poste de travail de conducteur (9) n'est pas occupé après un temps de tolérance d'occupation, notamment après 1 à 2 secondes, comme un état de freinage et, dans une première étape, commande l'actionneur (10) de telle sorte que la machine de travail mobile est freinée jusqu'à l'immobilisation avec une force de freinage commandée, notamment égale à moins de la moitié de la force de freinage maximale, et, dans une deuxième étape, commande l'actionneur (10) de telle sorte que le frein de stationnement est actionné avec la pleine force de freinage en position de freinage lorsque la machine de travail mobile est immobile.

8. Procédé de commande selon l'une des revendications 1 à 7, **caractérisé en ce que** la machine de travail mobile est un chariot de manutention, notamment un gerbeur (1), et la commande reçoit la vitesse de déplacement du chariot de manutention, notamment par le biais d'un système de bus CAN et détermine la nécessité d'une réduction de la vitesse pour des raisons de sécurité en fonction de la vitesse de déplacement et d'au moins un paramètre supplémentaire comme une charge appliquée et/ou une hauteur de levage et/ou une inclinaison du chariot de manutention et/ou une accélération et/ou une accélération transversale et/ou une vitesse de déplacement prédéfinie par un conducteur et/ou un angle de braquage et commande l'actionneur de telle sorte que le chariot de manutention est freiné avec une force de freinage commandée.

9. Procédé de commande selon la revendication 8, **caractérisé en ce que** le chariot de manutention est entraîné au moyen de moteurs d'entraînement électriques et les paramètres détectés sont l'état opérationnel des moteurs d'entraînement, notamment leur courant consommé.

10. Procédé de commande selon la revendication 8 ou 9, **caractérisé en ce que** la commande (15) détecte la vitesse de déplacement et l'accélération du chariot de manutention et définit la nécessité d'une réduction de la vitesse pour des raisons de sécurité à partir du rapport entre l'accélération et la vitesse de déplacement.

11. Procédé de commande selon l'une des revendications 1 à 10, **caractérisé en ce que** la commande freine la machine de travail mobile avec une force de freinage commandée en fonction de signaux d'unités d'émission/réception dans l'environnement de la machine de travail mobile, notamment de transpondeurs RFID.

12. Procédé de commande selon la revendication 11, **caractérisé en ce que** des unités d'émission/réception sont disposées dans l'environnement de systèmes de prévention de collision et/ou de systèmes de reconnaissance de personnes.

13. Procédé de commande selon l'une des revendications 1 à 12, **caractérisé en ce que** la commande freine la machine de travail mobile avec une force de freinage commandée en fonction de systèmes de prévention de collision et/ou de systèmes de reconnaissance de personnes de la machine de travail mobile.

14. Procédé de commande selon l'une des revendications 5 à 13, **caractérisé en ce que** la force de freinage commandée n'est pas générée par le frein de stationnement, mais par un mécanisme d'entraînement de déplacement de la machine de travail mobile qui peut générer une force de freinage, notamment par des moteurs d'entraînement électriques qui peuvent, en tant que générateurs, générer une force de freinage.

15. Procédé de commande selon l'une des revendications 1 à 14, **caractérisé en ce que** la commande (15), lorsque la machine de travail mobile se déplace, détecte l'immobilité de la machine de travail mobile comme un état de freinage après un signal de mise hors circuit du dispositif de contrôle d'accès.

16. Procédé de commande selon l'une des revendications 1 à 15, **caractérisé en ce que** la commande (15), lorsque la machine de travail mobile se déplace, ne détecte l'immobilité de la machine de travail mobile comme un état de freinage qu'après un signal d'actionnement du commutateur d'arrêt d'urgence.

17. Procédé de commande selon l'une des revendications 1 à 16, **caractérisé en ce qu'**après des états de freinage avec lesquels, lorsque la machine de travail mobile est immobile, un signal d'un capteur d'occupation d'un poste de travail de conducteur (9), notamment d'un siège de conducteur (3), indiquant que le poste de travail de conducteur (9) n'est pas occupé, est détecté après un temps de tolérance d'occupation ou
un signal indiquant que le poste de travail de conducteur (9) est occupé et, simultanément, l'absence d'un signal d'un transmetteur de vitesse de déplacement servant à commander la vitesse de déplacement de la machine de travail mobile, notamment d'une pédale d'accélérateur, après un temps d'attente de signal de déplacement, est détecté
un mode de fonctionnement de freinage d'assistance est reconnu par la commande (15), dans lequel le frein de stationnement est actionné par la commande (15) dans une position desserrée lors d'un actionnement du transmetteur de vitesse de déplacement.

18. Procédé de commande selon la revendication 17, **caractérisé en ce que** les mouvements de déplacement de la machine de travail mobile peuvent être commandés par le biais d'une commande à pédale unique, avec laquelle un sens de déplacement peut être prédéfini par le biais d'un commutateur de sens de déplacement et un signal de déplacement peut être entré par le biais d'une pédale d'accélérateur en tant que transmetteur de vitesse de déplacement, lorsque la machine de travail mobile est immobile dans le mode de fonctionnement de freinage d'assistance, le frein d'immobilisation étant actionné dans une position desserrée par la commande (15) avec un sens de déplacement prédéfini lors d'un actionnement de la pédale d'accélérateur.

19. Procédé de commande selon la revendication 17, **caractérisé en ce que** les mouvements de déplacement de la machine de travail peuvent être commandés par le biais d'une commande à deux pédales, avec laquelle une pédale de marche avant en tant que transmetteur de vitesse de déplacement génère un signal de déplacement pour la marche avant et une pédale de marche arrière en tant que transmetteur de vitesse de déplacement génère un signal de déplacement pour la marche arrière, lorsque la machine de travail mobile est immobile dans le mode de fonctionnement de freinage d'assistance, le frein d'immobilisation étant actionné dans une position desserrée par la commande (15) lors d'un actionnement de la pédale de marche avant et/ou de la pédale de marche arrière.

20. Procédé de commande selon l'une des revendications 1 à 19, **caractérisé en ce que** la commande (15), après un état de freinage en raison d'un signal d'actionnement du commutateur d'arrêt d'urgence, n'actionne le frein de stationnement dans une position desserrée qu'après un double signal d'actionnement d'un transmetteur de vitesse de déplacement destiné à commander la vitesse de déplacement de la machine de travail mobile, notamment d'une pédale d'accélérateur.

21. Machine de travail mobile, notamment chariot de manutention, comprenant un frein de stationnement qui peut être actionné par une commande (15) au moyen d'un actionneur électrique (10), l'actionneur (10) se trouvant en liaison fonctionnelle avec le frein de stationnement, en vue de son actionnement, par un moyen de transmission, notamment un câble de frein, et appliquant la force d'actionnement de frein au frein de stationnement, et la commande (15) mettant en oeuvre un procédé selon l'une des revendications précédentes.

22. Machine de travail mobile selon la revendication 21, **caractérisée en ce que** l'actionneur (10) comporte un moteur électrique (11) et une transmission par tige filetée, notamment une transmission par tige filetée autobloquante, reliée de manière motrice au moteur électrique (11), la transmission par tige filetée agissant sur le moyen de transmission.
